(19) Europäisches Patentamt
European Patent Office
Office européen des brevets

(11) **EP 3 346 019 B1**

(12) **EUROPEAN PATENT SPECIFICATION**

(45) Date of publication and mention
of the grant of the patent:
**25.12.2019 Bulletin 2019/52**

(51) Int Cl.:
*C22C 38/00* *(2006.01)*     *C22C 38/02* *(2006.01)*
*C22C 38/04* *(2006.01)*     *C22C 38/06* *(2006.01)*
*C21D 9/46* *(2006.01)*     *B32B 15/01* *(2006.01)*
*C23C 2/06* *(2006.01)*     *C21D 8/02* *(2006.01)*
*C22C 38/08* *(2006.01)*     *C22C 38/12* *(2006.01)*
*C22C 38/14* *(2006.01)*     *C22C 38/16* *(2006.01)*
*C22C 38/38* *(2006.01)*     *C22C 18/04* *(2006.01)*
*C22C 38/58* *(2006.01)*     *C21D 1/32* *(2006.01)*

(21) Application number: **16841104.9**

(22) Date of filing: **26.08.2016**

(86) International application number:
**PCT/JP2016/003902**

(87) International publication number:
**WO 2017/038070 (09.03.2017 Gazette 2017/10)**

(54) **HIGH STRENGTH THIN STEEL SHEET AND METHOD FOR MANUFACTURING SAME**

HOCHFESTES DÜNNES STAHLBLECH UND VERFAHREN ZUR HERSTELLUNG DAVON

TÔLE D'ACIER MINCE À HAUTE RÉSISTANCE ET PROCÉDÉ POUR LA FABRICATION DE CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2015 JP 2015174859**

(43) Date of publication of application:
**11.07.2018 Bulletin 2018/28**

(73) Proprietor: **JFE Steel Corporation
Tokyo 100-0011 (JP)**

(72) Inventors:
• **SHIIMORI, Fusae**
**Tokyo 100-0011 (JP)**
• **KAWASAKI, Yoshiyasu**
**Tokyo 100-0011 (JP)**
• **KANEKO, Shinjiro**
**Tokyo 100-0011 (JP)**
• **YOKOTA, Takeshi**
**Tokyo 100-0011 (JP)**

• **SETO, Kazuhiro**
**Tokyo 100-0011 (JP)**
• **TANAKA, Takaaki**
**Tokyo 100-0011 (JP)**
• **TOJI, Yuki**
**Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 2 738 278**     **EP-A1- 2 762 585**
**EP-A1- 2 765 212**     **EP-A1- 2 821 517**
**WO-A1-2013/047739**     **WO-A1-2013/047821**
**WO-A1-2013/051238**     **JP-A- 2010 065 272**
**JP-A- 2010 065 272**     **JP-A- 2010 090 475**
**JP-A- 2011 017 046**     **JP-A- 2012 237 044**
**JP-A- 2012 237 044**     **JP-A- 2013 072 101**
**JP-A- 2014 009 377**

## Description

TECHNICAL FIELD

This disclosure relates to a high-strength thin steel sheet and particularly to a high-strength thin steel sheet having both a tensile strength (TS) of 980 MPa or more and excellent ductility. The high-strength thin steel sheet can be suitably used for, for example, automotive parts which are to be press-formed into complicated shapes. This disclosure also relates to a method of producing the high-strength thin steel sheet.

BACKGROUND

In recent years, improved fuel efficiency of vehicles has been required from the perspective of global environment protection, which has encouraged reductions in weight of automotive bodies. Additionally, improved crashworthiness of automobiles has also been required for the purpose of ensuring the safety of passengers in case of collision. In view of these requirements, the application of high-strength thin steel sheet having a TS of 980 MPa or more to automobiles is expanding.

However, in general, when strength of a steel sheet is increased, ductility of the steel sheet decreases. Therefore, it is desirable to develop a high-strength thin steel sheet that can keep high ductility even the steel sheet has been strengthened.

In response to such a demand, for example, JP 4291860 B (PTL 1) proposes a high-strength steel sheet with improved ductility and stretch flangeability, in which most of the microstructure is made into a fine tempered martensite and the volume ratio of retained austenite is suppressed to 3 % or less. The high-strength steel sheet is produced by subjecting a steel sheet having a total volume ratio of martensite and retained austenite to the total volume of the microstructure of 90 % or more to a specific heat treatment. In the heat treatment, the steel sheet is heated and held in a two-phase region of ferrite phase and austenite phase, cooled to Ms point or lower, and then tempered.

JP 4362319 B (PTL 2) proposes a high-strength steel sheet excellent in delayed fracture resistance. The high-strength steel sheet contains Mo and V as essential components and has a microstructure where at least one of martensite, tempered martensite and bainite is 70 % or more in area ratio and retained austenite is 5 % or less in area ratio.

JP 3889768 B (PTL 3) proposes a high-strength cold-rolled steel sheet excellent in coating film adhesion and ductility. The high-strength cold-rolled steel sheet has a microstructure consisting of tempered martensite, ferrite and retained austenite, and the number of Mn-Si composite oxides on the steel sheet surface and the coverage ratio of Si oxide on the steel sheet surface are suppressed within specific ranges. EP2821517 A1 discloses a high-strength steel sheet with excellent warm formability for use in car components, etc. and a process for manufacturing the same.

CITATION LIST

Patent Literature

PTL 1: JP 4291860 B

PTL 2: JP 4362319 B

PTL 3: JP 3889768 B

SUMMARY

(Technical Problem)

However, the conventional high-strength steel sheets as described in PTLs 1 to 3 have the following problems.

The high-strength steel sheet described in PTL 1 achieves high hole expansion formability by making most of the microstructure into a fine tempered martensite phase. However, since the volume ratio of retained austenite phase is as low as 3 % or less, the elongation (E1) at a tensile strength of 980 MPa or more is only about 16 %, rendering the ductility insufficient.

The high-strength steel sheet described in PTL 2 is disadvantageous in terms of cost since the addition of expensive Mo and V is indispensable. Furthermore, PTL 2 does not describe anything about the formability of the high-strength steel sheet. Actually, the high-strength steel sheet described in PTL 2 does not have sufficient ductility since the volume fraction of retained austenite is small.

Regarding the high-strength cold-rolled steel sheet described in PTL 3, since the volume fraction of tempered martensite phase is too large, the TS-El balance, which is the product of tensile strength (TS) and elongation (El) and is expressed as TS $\times$ El, may be insufficient.

Furthermore, none of PTLs 1 to 3 takes the dispersion of El into consideration.

Aiming at advantageously solving the aforementioned problems, the present disclosure provides a high-strength thin steel sheet excellent in both tensile strength and elongation with small elongation anisotropy, and a method of producing the high-strength thin steel sheet.

(Solution to Problem)

We have made intensive studies to solve the aforementioned problems. As a result, we discovered the following (1) and (2).

(1) By strictly controlling the following (i) to (iv) for a steel sheet having a specific chemical composition, it is possible to obtain a high-strength thin steel sheet having a TS of 980 MPa or more with extremely excellent ductility as compared with conventional ones and extremely small elongation anisotropy:

(i) area ratios of ferrite, tempered bainitic ferrite, bainitic ferrite, martensite, and retained austenite;

(ii) average equivalent circular diameter of martensite and retained austenite grains;

(iii) area ratio of martensite and retained austenite grains having an equivalent circular diameter of 2.0 $\mu$m or more to the total area of martensite and retained austenite; and

(iv) average minor axis length of martensite and retained austenite grains.

(2) A high-strength thin steel sheet satisfying the conditions of (1) can be produced by subjecting a steel sheet having a specific chemical composition and a microstructure where the total area ratio of bainitic ferrite and retained austenite is 70 % or more to heating, soaking, cooling and temperature holding under a set of strictly controlled conditions.

We studied on the above discoveries and completed the present disclosure. Specifically, the primary features of the present disclosure are defined in the claims.

(Advantageous Effect)

According to the present disclosure, it is possible to stably provide a high-strength thin steel sheet having a TS of 980 MPa or more with excellent ductility and small elongation anisotropy. The high-strength thin steel sheet is extremely suitable for being used as automotive parts which are to be press-formed into complicated shapes. Additionally, by applying the structural parts produced with the high-strength thin steel sheet to automotive bodies, it is possible to further improve crashworthiness of automobiles and to improve fuel efficiency by reducing the weight of automotive bodies. Therefore, the present disclosure can make a significant contribution to industry development.

DETAILED DESCRIPTION

The following describes the present disclosure in detail. The chemical composition and microstructure of the high-strength thin steel sheet in one embodiment of the present disclosure are defined as stated above.

[Chemical composition]

The reasons for limiting the chemical composition of the present disclosure as stated above are described first. In the following description, "%" regarding the chemical composition denotes "mass%" unless otherwise noted.

C: 0.10 % or more and 0.35 % or less

C is an element that contributes to improvement in strength of a steel sheet. C improves steel strength by dissolving itself in steel or by precipitating itself as carbides. Additionally, C concentrates into austenite to stabilize retained austenite. As a result, ductility of a steel sheet is improved. Therefore, C is an important element for controlling both strength and ductility. To obtain such effect in a steel sheet having a TS of 980 MPa or more, the C content should be 0.10 % or more. The C content is preferably 0.15 % or more. The C content is more preferably 0.18 % or more. The C content is still more preferably 0.20 % or more. On the other hand, excessive addition of C may cause deterioration of ductility due to increase in strength and impair weldability. Therefore, the C content is 0.35 % or less. The C content is preferably 0.30 % or less. The C content is more preferably 0.28 % or less. The C content is still more preferably 0.26 % or less.

Si: 0.5 % or more and 2.0 % or less

Si increases strength of steel through solid solution strengthening and contributes to improvement in ductility of ferrite by enhancing strain hardenability. Additionally, Si promotes concentration of C into austenite, contributing to stabilization of retained austenite. To obtain this effect, the Si content should be 0.5 % or more. The Si content is preferably 1.0 % or more. The Si content is more preferably 1.2 % or more. The Si content is still more preferably 1.3 % or more. On the other hand, when the Si content exceeds 2.0 %, not only is the effect saturated, but also surface quality of the steel sheet deteriorates. As a result, chemical convertibility and coating property may be deteriorated. Therefore, the Si content is 2.0 % or less. The Si content is preferably 1.8 % or less. The Si content is more preferably 1.6 % or less. The Si content is still more preferably 1.5 % or less.

Mn: 1.5 % or more and 3.0 % or less

Mn is an austenite-stabilizing element and contributes to improvement in ductility by stabilizing retained austenite. Additionally, Mn, as a hardenability improving element, promotes formation of martensite and contributes to improvement in strength of a steel sheet. In order to obtain the steel sheet strength required in the present disclosure, the Mn content should be 1.5 % or more. The Mn content is preferably 1.6 % or more. The Mn content is more preferably 1.7 % or more. On the other hand, when the Mn content exceeds 3.0 %, martensite excessively forms and strength increases. As a result, ductility is deteriorated. Additionally, Mn has an effect of suppressing formation of retained austenite. Accordingly, when Mn is excessively present, a required amount of retained austenite cannot be obtained, leading to deterioration of ductility. Therefore, the Mn content is 3.0 % or less. The Mn content is preferably 2.7 % or less. The Mn content is more preferably 2.5 % or less. The Mn content is still more preferably 2.3 % or less.

P: 0.001 % or more and 0.050 % or less

P, which is an element inevitably mixed in the steel as impurities, effectively strengthens the steel, yet deteriorates weldability. Therefore, the P content is 0.050 % or less. The P content is preferably 0.030 % or less. The P content is more preferably 0.020 % or less. On the other hand, excessive reduction in P content increases refining cost. Therefore, the P content is 0.001 % or more. The P content is preferably 0.005 % or more.

S: 0.0001 % or more and 0.0100 % or less

S, which is an element inevitably mixed in the steel as impurities, forms inclusions such as coarse MnS and reduces local ductility significantly. Therefore, the S content is 0,0100 % or less. The S content is preferably 0.0050 % or less. The S content is more preferably 0.0030 % or less. On the other hand, excessive reduction in S content increases refining cost. Therefore, the S content is 0.0001 % or more. The S content is preferably 0.0005 % or more.

Al: 0.001 % or more and 1.00 % or less

Al is an element as with Si that promotes concentration of C into austenite and contributes to stabilization of retained austenite. From the perspective of promoting formation of retained austenite, the Al content is 0.001 % or more. The Al content is preferably 0.020 % or more. The Al content is more preferably 0.030 % or more. On the other hand, excessive addition of Al increases production cost. Therefore, the Al content is 1.00 % or less. The Al content is preferably 0.60 % or less. The Al content is more preferably 0.40 % or less. The Al content is still more preferably 0.30 % or less.

N: 0.0005 % or more and 0.0200 % or less

N is an element inevitably mixed in the steel as impurities. N bonds with carbonitride-forming elements such as Al to form precipitates, contributing to improvement in strength and refinement of microstructure. To obtain this effect, the N content should be 0.0005 % or more. The N content is preferably 0.0010 % or more. On the other hand, when the N content exceeds 0.0200 %, anti-aging property of the steel sheet deteriorates. Therefore, the N content is 0.0200 % or less. The N content is preferably 0.0150 % or less. The N content is more preferably 0.0100 % or less.

The chemical composition of the high-strength thin steel sheet in one embodiment of the present disclosure consists of the above elements and the balance. The balance is Fe and inevitable impurities.

In another embodiment of the present disclosure, it is possible to arbitrarily contain at least one selected from the group consisting of Ti, Nb, and V with the following contents in addition to the above chemical composition.

Ti: 0.005 % or more and 0.100 % or less

Ti has an effect of precipitation strengthening through formation of carbonitrides and an effect of refining crystal grains and is an element effective for strengthening steel. When adding Ti, in order to effectively exhibit the effects, the Ti content should be 0.005 % or more. The Ti content is preferably 0.010 % or more. On the other hand, excessive addition of Ti saturates the effects and increases production cost. Therefore, when adding Ti, the Ti content is 0.100 % or less. The Ti content is preferably 0.080 % or less.

Nb: 0.005 % or more and 0.100 % or less

As with Ti, Nb has an effect of precipitation strengthening through formation of carbonitrides and an effect of refining crystal grains and is an element effective for strengthening steel. When adding Nb, in order to effectively exhibit the effects, the Nb content should be 0.005 % or more. The Nb content is preferably 0.010 % or more. On the other hand, excessive addition of Nb saturates the effects and increases production cost. Therefore, when adding Nb, the Nb content is 0.100 % or less. The Nb content is preferably 0.080 % or less.

V: 0.005 % or more and 0.100 % or less

As with Ti, V has an effect of precipitation strengthening through formation of carbonitrides and an effect of refining crystal grains and is an element effective for strengthening steel. When adding V, in order to effectively exhibit the effects, the V content should be 0.005 % or more. The V content is preferably 0.010 % or more. On the other hand, excessive addition of V saturates the effects and increases production cost. Therefore, when adding V, the V content is 0.100 % or less. The V content is preferably 0.080 % or less. Furthermore, in another embodiment of the present disclosure, it is possible to arbitrarily contain at least one selected from the group consisting of Cr, Ni, Mo, Cu and B with the following contents in addition to the above chemical composition.

Cr: 0.05 % or more and 1.0 % or less

Cr has an effect of enhancing hardenability and promoting formation of martensite and is therefore a useful steel-strengthening element. In order to effectively exhibit such an effect, when adding Cr, the Cr content should be 0.05 % or more. On the other hand, when the Cr content exceeds 1.0 %, ductility deteriorates because martensite excessively forms. Therefore, when adding Cr, the Cr content is 1.0 % or less.

Ni: 0.05 % or more and 0.50 % or less

As with Cr, Ni has an effect of enhancing hardenability and promoting formation of martensite and is therefore a useful steel-strengthening element. In order to effectively exhibit such an effect, when adding Ni, the Ni content should be 0.05 % or more. On the other hand, when the Ni content exceeds 0.50 %, ductility deteriorates because martensite excessively forms. Therefore, when adding Ni, the Ni content is 0.50 % or less.

Mo: 0.05 % or more and 1.0 % or less

As with Cr, Mo has an effect of enhancing hardenability and promoting formation of martensite and is therefore a useful steel-strengthening element. In order to effectively exhibit such an effect, when adding Mo, the Mo content should be 0.05 % or more. On the other hand, when the Mo content exceeds 1.0 %, ductility deteriorates because martensite excessively forms. Therefore, when adding Mo, the Mo content is 1.0 % or less.

Cu: 0.005 % or more and 0.500 % or less

As with Cr, Cu has an effect of enhancing hardenability and promoting formation of martensite and is therefore a useful steel-strengthening element. In order to effectively exhibit such an effect, the Cu content should be 0.005 % or more when adding Cu. On the other hand, when the Cu content exceeds 0.500 %, ductility deteriorates because martensite excessively forms. Therefore, when adding Cu, the Cu content is 0.500 % or less.

B: 0.0001 % or more and 0.0100 % or less

As with Cr, B has an effect of enhancing hardenability and promoting formation of martensite and is therefore a useful steel-strengthening element. In order to effectively exhibit such an effect, the B content should be 0.0001 % or more when adding B. On the other hand, when the B content exceeds 0.0100 %, ductility deteriorates because martensite excessively forms. Therefore, when adding B, the B content is 0.0100 % or less.

Moreover, in another embodiment of the present disclosure, it is possible to arbitrarily contain at least one of Ca and REM (Rare Earth Metal) with the following contents in addition to the above chemical composition.

Ca: 0.0001 % or more and 0.0050 % or less

Ca has an effect of controlling the form of sulfide inclusion and is effective for suppressing deterioration of local ductility. When adding Ca, in order to obtain the effects, the Ca content should be 0.0001 % or more. On the other hand, when the Ca content exceeds 0.0050 %, the effects are saturated. Therefore, when adding Ca, the Ca content is 0.0050 % or less.

REM: 0.0005 % or more and 0.0050 % or less

As with Ca, REM has an effect of controlling the form of sulfide inclusion and is effective for suppressing deterioration of local ductility. When adding REM, in order to obtain the effects, the REM content should be 0.0005 % or more. On the other hand, when the REM content exceeds 0.0050 %, the effects are saturated. Therefore, when adding REM, the REM content is 0.0050 % or less.

The chemical composition of the high-strength thin steel sheet in one embodiment of the the present disclosure can be expressed as follows:

a chemical composition containing, by mass%.
C: 0.10 % or more and 0.35 % or less,
Si: 0.5 % or more and 2.0 % or less,
Mn: 1.5 % or more and 3.0 % or less,
P: 0.001 % or more and 0.050 % or less,
S: 0.0001 % or more and 0.0100 % or less,
Al: 0.001 % or more and 1.00 % or less,
N: 0.0005 % or more and 0.0200 % or less,
optionally, at least one selected from the group consisting of Ti: 0.005 % or more and 0.100 % or less, Nb: 0.005 % or more and 0.100 % or less, and V: 0.005 % or more and 0.100 % or less,
optionally, at least one selected from the group consisting of Cr: 0.05 % or more and 1.0 % or less, Ni: 0.05 % or more and 0.50 % or less, Mo: 0.05 % or more and 1.0 % or less, Cu: 0.005 % or more and 0.500 % or less, and B: 0.0001 % or more and 0.0100 % or less, and
optionally, at least one of Ca: 0.0001 % or more and 0.0050 % or less, and REM: 0.0005 % or more and 0.0050 % or less,
the balance being Fe and inevitable impurities.

C/Mn: 0.08 or more and 0.20 or less

Furthermore, in the present disclosure, the ratio of C content in mass % to Mn content in mass % in the above chemical composition, expressed as C/Mn, should be 0.08 or more and 0.20 or less. The reasons for the limitation are as described below.

When a steel sheet containing retained austenite is processed, a part of retained austenite in which strain has caused by the processing transforms into martensite, in other words, strain-induced transformation occurs. Because of the strain-induced transformation, the deformed part of the steel sheet hardens and strain localization is suppressed, and accordingly uniform elongation is improved. Although C and Mn are elements that contribute to stabilization of retained austenite as described above, Mn has an effect of suppressing formation of retained austenite. Therefore, in order to obtain excellent uniform elongation, the ratio of C content to Mn content in the chemical composition of the steel sheet, expressed as C/Mn, should be appropriately controlled.

When C/Mn is less than 0.08, since the C content is small and the Mn content is large, stability of retained austenite is low and formation of retained austenite is suppressed. As a result, a required amount of stable retained austenite cannot be obtained. Therefore, C/Mn is 0.08 or more. C/Mn is preferably 0.09 or more. On the other hand, when C/Mn exceeds 0.20, since the C content is large and the Mn content is small, the concentration of C in retained austenite excessively increases. As a result, martensite excessively hardens during the strain-induced martensitic transformation, leading to deterioration of formability. Therefore, C/Mn is 0.20 or less. C/Mn is preferably 0.17 or less. C/Mn is more preferably 0.15 or less.

[Micro structure]

Next, the reasons why the microstructure of the high-strength thin steel sheet in the present disclosure is limited as described above will be explained.

Total area ratio of F + TBF + BF: 40 % to 70 %

Ferrite (hereinafter may be abbreviated to "F") forms during the cooling after soaking and contributes to improvement in ductility of steel. Tempered bainitic ferrite (hereinafter may be abbreviated to "TBF") is a microstructure where bainitic ferrite in the starting microstructure, which will be described later, has been tempered. TBF has an influence on formation of retained austenite in final microstructure, and contributes to improvement in ductility of steel like ferrite. As will be described later, bainitic ferrite (hereinafter may be abbreviated to "BF") is formed by maintaining the cooling end temperature at 350 °C or higher and 550 °C or lower. The C released during the formation of BF concentrates into austenite to stabilize retained austenite. As a result, ductility is improved.
As stated above, F, TBF and BF all contribute to improvement in ductility. In order to ensure a required ductility, the total area ratio of F + TBF + BF with respect to the total area of the microstructure of the high-strength thin steel sheet (hereinafter "total area ratio of F + TBF + BF") should be 40 % or more. The total area ratio of F + TBF + BF is preferably 45 % or more. The total area ratio of F + TBF + BF is more preferably 50 % or more. The total area ratio of F + TBF + BF is still more preferably 55 % or more. On the other hand, when the total area ratio of F + TBF + BF exceeds 70 %, it becomes difficult to ensure a TS of 980 MPa or more. Therefore, the total area ratio of F + TBF + BF is 70 % or less. The total area ratio of F + TBF + BF is preferably 65 % or less.

Area ratio of M: 5 % to 30 %

In the present disclosure, in order to ensure the strength, martensite (hereinafter may be abbreviated to "M") is contained in the microstructure. In order to obtain a required strength, the area ratio of M with respect to the total area of the microstructure of the high-strength thin steel sheet (hereinafter "area ratio of M") should be 5 % or more. The area ratio of M is preferably 10 % or more. The area ratio of M is more preferably 15 % or more. On the other hand, when the area ratio of M exceeds 30 %, formability cannot be ensured. Therefore, the area ratio of M is 30 % or less. The area ratio of M is preferably 25 % or less.

Area ratio of RA: 10 % to 35 %

Retained austenite (hereinafter may be abbreviated to "RA") hardens the deformed part through strain-induced transformation. That is to say, a part of retained austenite in which strain has occurred during the deformation of the material transforms into martensite to harden the deformed part. Therefore, the presence of RA suppresses strain localization and improves uniform elongation of the steel sheet. In order to achieve high ductility while maintaining a TS of 980 MPa or more, the area ratio of RA to the total area of the microstructure of the high-strength thin steel sheet (hereinafter "area ratio of RA") should be 10 % or more. The area ratio of RA is preferably 15 % or more. The area ratio of RA is more preferably 17 % or more. On the other hand, when the area ratio of RA exceeds 35 %, cracks are likely to occur in flange portions during press forming. Therefore, the area ratio of RA is 35 % or less. The area ratio of RA is preferably 30 % or less. The area ratio of RA is more preferably 25 % or less.
In the present disclosure, the area ratio of each phase can be measured by the following method.

- Retained austenite

The area ratio of retained austenite can be calculated by determining the x-ray diffraction intensity of a plane of sheet thickness 1/4, which is the plane at a depth of one-fourth of the sheet thickness from the steel sheet surface and is exposed by polishing the steel sheet surface to a depth of one-fourth of the sheet thickness. Specifically, the volume ratio of retained austenite is calculated from the peak intensity ratio of (200) and (211) planes of BCC phase and (200), (220) and (311) planes of FCC phase through X-ray diffraction using Co K-alpha X-ray. The microstructure of the steel sheet of the present disclosure is three-dimensionally uniform, and therefore the volume ratio can be regarded as the area ratio of RA. Measurement is carried out at three positions randomly selected on one high-strength thin steel sheet, and the average value of the obtained values is taken as the area ratio of retained austenite.

- Microstructure other than retained austenite

The area ratio of each microstructure other than retained austenite can be obtained by etching a cross section in the rolling direction of the high-strength thin steel sheet with nital and then observing the cross section with a scanning electron microscope (SEM). The observation position is at the center of the width direction of the steel sheet and at a depth of one-fourth of the sheet thickness. An SEM image of the observation position is photographed at a magnification of 2000 times, and the area ratio of each microstructure is calculated through image analysis of the obtained SEM image. In the image analysis, the occupied area of each microstructure present in a randomly set 50 $\mu$m $\times$ 50 $\mu$m square region is determined and the area ratio thereof is calculated. The observation is carried out at five positions randomly selected on one high-strength thin steel sheet, and the average value of the obtained values is taken as the area ratio.

Each microstructure in the image analysis can be identified by the following method.

Firstly, retained austenite and martensite are observed as massive white regions having a relatively smooth surface in the SEM image. Therefore, the area ratio of martensite can be calculated by subtracting the area ratio of retained austenite measured by the above-mentioned method from the area ratio of the white region.

On the other hand, ferrite, tempered bainitic ferrite and bainitic ferrite are observed as black regions in the SEM image. Among the black regions, those in a massive form are identified as ferrite. Additionally, among the black regions, those having an elongated shape and a recognizable substructure are identified as bainitic ferrite, and those in which substructure cannot be recognized are identified as tempered bainitic ferrite. Examples of the substructure include internal structure of lath, block, packet, etc. in grains.

Note that in the present disclosure, the simple expression "area ratio" means an area ratio with respect to the total area of the microstructure of the target steel sheet. Additionally, the grain size measured in the present disclosure has a lower limit of 0.01 $\mu$m) which is the measurement limit.

Average equivalent circular diameter of secondary phase: 2.0 $\mu$m or less

In the present disclosure, it is also important to control the grain size of martensite and retained austenite (hereinafter, martensite and retained austenite are simply referred to as "secondary phase"). When the average equivalent circular diameter of grain of secondary phase (hereinafter simply referred to as "average equivalent circular diameter of secondary phase") is large, the steel sheet does not deform uniformly since localized strain occurs during the deformation of the steel sheet. Therefore, a steel sheet having a large average equivalent circular diameter of secondary phase is inferior to a steel sheet having a small average equivalent circular diameter of secondary phase in formability. Additionally, when the average equivalent circular diameter of secondary phase is large, C does not sufficiently concentrate into austenite and stability of retained austenite deteriorates. As a result, ductility of the steel sheet is deteriorated. Therefore, the average equivalent circular diameter of secondary phase is 2.0 $\mu$m or less. The average equivalent circular diameter of secondary phase is preferably 1.8 $\mu$m or less. The average equivalent circular diameter of secondary phase is more preferably 1.6 $\mu$m or less. On the other hand, the lower limit of the average equivalent circular diameter of secondary phase is not particularly limited. Although the lower the average equivalent circular diameter is the better, an average equivalent circular diameter of 0.5 $\mu$m or more or 1.0 $\mu$m or more is acceptable from the perspective of production.

Area ratio of coarse grain in secondary phase: 10 % or less

When the grain of secondary phase is coarse, stress concentrates on the interface between the secondary phase and the microstructure other than the secondary phase during the deformation of the steel sheet, leading to a high possibility of occurrence of void. Since the occurrence of void deteriorates formability, it is necessary to lower the ratio of coarse grain in secondary phase in order to improve formability. Therefore, the area ratio of martensite and retained austenite grains having an equivalent circular diameter of 2.0 $\mu$m or more to the total area of secondary phase (hereinafter "area ratio of coarse grain in secondary phase") is 10 % or less. The area ratio of coarse grain in secondary phase is preferably 9 % or less. The area ratio of coarse grain in secondary phase is more preferably 8 % or less. The area ratio of coarse grain in secondary phase is still more preferably 7 % or less. On the other hand, since the lower the area ratio of coarse grain in secondary phase is, the better, the lower limit of the area ratio is not particularly limited and may be 0 %.

Average minor axis length of secondary phase: 0.40 μm or less

In order to improve ductility of the high-strength thin steel sheet, it is necessary to make the secondary phase extended in a long and narrow shape. That is to say, when the secondary phase is in a long and narrow shape, the diffusion distance is shortened, and accordingly C and Mn can be efficiently distributed into austenite during annealing. The distributed C and Mn stabilize the austenite, and accordingly local concentration of strain during deformation of the steel sheet is suppressed and ductility is improved. To obtain this effect, the average minor axis length of martensite and retained austenite grains (hereinafter "average minor axis length of secondary phase") should be 0.40 μm or less. When the average minor axis length of secondary phase is larger than 0.40 μm, concentration of C and Mn into austenite is insufficient, rendering stability of retained austenite low. Additionally, since martensite easily forms when the average minor axis length of secondary phase is larger than 0.40 μm, a desired amount of retained austenite cannot be obtained. On the other hand, although the lower limit of the average minor axis length of secondary phase is not particularly limited, the average minor axis length is usually 0.10 μm or more or 0.15 μm or more.

The average major axis length of secondary phase is not particularly limited, yet it is preferably about 1 μm to 10 μm.

The average equivalent circular diameter of secondary phase, the area ratio of coarse grain in secondary phase and the average minor axis length of secondary phase can be obtained by etching a cross section in the rolling direction of the high-strength thin steel sheet with nital and then observing the cross section with a scanning electron microscope (SEM). The observation position is at the center of the width direction of the steel sheet and at a depth of one-fourth of the sheet thickness. An SEM image of the observation position is photographed at a magnification of 2000 times, and the obtained SEM image is subjected to image analysis. In the image analysis, occupied area and minor axis length of the secondary phase present in a randomly set 50 μm × 50 μm square region are determined. The average equivalent circular diameter of secondary phase is calculated from the obtained occupied area of the secondary phase. The measurement lower limit of the minor axis length was 0.01 μm. The observation is carried out at five positions randomly selected on one high-strength thin steel sheet, and the average value of the obtained values is adopted.

[Sheet thickness]

In the present disclosure, the high-strength thin steel sheet means a high-strength steel sheet having a sheet thickness of 0.6 mm to 6.0 mm. The high-strength thin steel sheet in the present disclosure may be a hot rolled steel sheet or a cold rolled steel sheet. When the high-strength thin steel sheet is a hot rolled steel sheet, the sheet thickness is preferably 1.2 mm to 6.0 mm. When the high-strength thin steel sheet is a cold rolled steel sheet, the sheet thickness is preferably 0.6 mm to 2.6 mm. A high-strength thin steel sheet that is a hot rolled steel sheet may be referred to as "high-strength hot-rolled steel sheet" and a high-strength thin steel sheet that is a cold rolled steel sheet may be referred to as "high-strength cold-rolled steel sheet". In a case where the high-strength thin steel sheet further includes a coated layer, the sheet thickness means the thickness of the high-strength thin steel sheet that is the base metal steel sheet excluding the coated layer.

[Zinc or zinc alloy coated layer]

The high-strength thin steel sheet of the present disclosure can further includes a zinc or zinc alloy coated layer on surface. A high-strength thin steel sheet including a zinc or zinc alloy coated layer may be referred to as "high-strength zinc or zinc alloy coated thin steel sheet". The "zinc or zinc alloy coated layer" here includes both of a galvanized layer and a zinc alloy coated layer. Any alloy coated layer containing zinc can be used as the zinc alloy coated layer. Preferable examples of the zinc alloy coated layer include a 5 % Al-Zn alloy coated layer containing 5 mass% of Al and a 55 % Al-Zn alloy coated layer containing 55 mass% of Al.

The zinc or zinc alloy coated layer may be an electro zinc or zinc alloy coated layer or a hot-dip zinc or zinc alloy coated layer. However, it is preferably a hot-dip zinc or zinc alloy coated layer. A high-strength thin steel sheet including a hot-dip zinc or zinc alloy coated layer may be referred to as "high-strength hot-dip zinc or zinc alloy coated thin steel sheet". Additionally, the hot-dip zinc or zinc alloy coated layer may be an alloyed hot-dip zinc or zinc alloy coated layer which is subjected to alloying treatment after being hot-dip zinc or zinc alloy coated. A high-strength thin steel sheet including an alloyed hot-dip zinc or zinc alloy coated layer may be referred to as "high-strength alloyed hot-dip zinc or zinc alloy coated thin steel sheet".

The following describes a method of producing the high-strength thin steel sheet in one embodiment of the present disclosure.

The high-strength thin steel sheet of the present disclosure can be produced by subjecting a steel sheet having a specific chemical composition and a specific microstructure to heat treatment under a set of specific conditions. Hereinafter, the steel sheet to be subjected to the heat treatment may be referred to as "starting steel sheet" and the microstructure of the starting steel sheet may be referred to as "starting microstructure".

[Starting steel sheet]

In the present disclosure, the steel sheet to be subjected to the heat treatment, in other words the starting steel sheet may be anything as long as it has the chemical composition and microstructure as described below. Both of hot rolled steel sheet and cold rolled steel sheet can be used as the starting steel sheet.

[Chemical composition of starting steel sheet]

The chemical composition of the starting steel sheet can be the same as the chemical composition of the high-strength thin steel sheet described above.

[Microstructure of starting steel sheet]

Total area ratio of BF + RA: 70 % or more

In the present disclosure, a steel sheet having a microstructure where the total area ratio of bainitic ferrite and retained austenite to the total area of the microstructure of the steel sheet (hereinafter "total area ratio of BF + RA") is 70 % or more is used as the starting steel sheet. The high-strength thin steel sheet of the present disclosure can be obtained by subjecting a starting steel sheet having the microstructure to the heat treatment which will be described later. The total area ratio of BF + RA is preferably 73 % or more. The total area ratio of BF + RA is more preferably 75 % or more. The total area ratio of BF + RA is still more preferably 78 % or more. On the other hand, since the higher the total area ratio of BF + RA is, the better, the upper limit thereof is not particularly limited and may be 100 %.

The area ratio with BF alone and the area ratio with RA alone are not particularly limited as long as the above condition is satisfied. However, a too small area ratio of RA is likely to result in a lumpy secondary phase in final microstructure. Therefore, the area ratio of RA to the total area of the microstructure of the starting steel sheet is preferably 1 % or more. On the other hand, a too large area ratio of RA is likely to result in a coarse secondary phase in final microstructure. Therefore, the area ratio of RA to the total area of the microstructure of the starting steel sheet is preferably 30 % or less.

The microstructure of the starting steel sheet may contain any other microstructure as the balance other than BF and RA. Examples of the other microstructure include ferrite and martensite. The total area ratio of the other microstructure is 30 % or less, and the lower limit of the total area ratio may be 0 %.

It is preferable if the starting steel sheet further contains a microstructure where lath-shaped retained austenite exists among bainitic ferrite. A starting steel sheet containing such microstructure can maintain the lath shape of the retained austenite even after the heat treatment which will be described later. As a result, the secondary phase in the eventually obtained steel sheet microstructure tends to be in a long and narrow shape. Consequently, the concentration of C into retained austenite is sufficient to stabilize the retained austenite, which further improves ductility. Additionally, since the secondary phase is finely dispersed, strain is likely to disperse and uniformly deform during deformation of the steel sheet, which further improves formability.

In the present disclosure, the method of producing the starting steel sheet is not particularly limited and can be any one as long as the starting microstructure described above is obtainable. Nevertheless, an example of the production method will be provided below.

When the starting steel sheet is a hot rolled steel sheet, the starting steel sheet can be produced by hot rolling a steel slab having the chemical composition described above. The steel slab can be obtained by smelting and casting steel whose chemical composition has been adjusted to the above range according to a conventional method. The hot rolling can be performed, for example, by heating the steel slab to a heating temperature of 1150 °C or higher and then rolling the steel slab at a finisher delivery temperature of 850 °C or higher. The rolled steel sheet can be coiled, for example, after being cooled down to a coiling temperature of 350 °C or higher and 550 °C or lower at an average cooling rate of 30 °C/s or more. By performing hot rolling and coiling under the above conditions, it is possible to obtain a starting steel sheet, which is a hot-rolled steel sheet, having the starting microstructure described above.

When the starting steel sheet is a cold rolled steel sheet, the starting steel sheet can be produced by subjecting a steel slab having the chemical composition described above to hot rolling and then cold rolling and subsequently a heat treatment in which the starting microstructure is obtained. The steel slab can be produced by smelting and casting steel whose chemical composition has been adjusted to the above range according to a conventional method. The hot rolling can be performed, for example, by heating the steel slab to a heating temperature of 1150 °C or higher and then rolling the steel slab at a finisher delivery temperature of 850 °C or higher. The rolled steel sheet can be coiled, for example, after being cooled down to a coiling temperature of 600 °C or higher and 700 °C or lower at an average cooling rate of 30 °C/s or more. Subsequently, the obtained hot rolled steel sheet is pickled and then cold rolled. In the pickling, for example, hydrochloric acid can be used. The rolling reduction in the cold rolling is preferably 40 % or more. Furthermore, the obtained cold rolled steel sheet is subject to a heat treatment to obtain the starting microstructure. In the heat treatment, the cold rolled steel sheet is heated to a soaking temperature and then held at the soaking temperature, followed by cooling the steel sheet down to a cooling end temperature and then holding the steel sheet at the cooling end temperature. Preferable conditions for each step are as follows. Soaking temperature is $Ac_3$ transformation temperature or higher; soaking time is 60 seconds or more and 600 seconds or less; average cooling rate from soaking temperature to cooling end temperature is less than 50 °C/s, cooling end temperature is 350 °C or higher and 550 °C or lower, and holding time is 30 seconds or more and 1200 seconds or less. By performing a heat treatment under the above conditions, it is possible to obtain a starting steel sheet, which is a cold rolled steel sheet, having the starting microstructure described above.

The $Ac_3$ transformation temperature here can be calculated with the following equation of Andrews et al.

$$Ac_3 = 910 - 203[C]^{1/2} + 45[Si] - 30[Mn] - 20[Cu] - 15[Ni] + 11[Cr] + 32[Mo] + 104[V] + 400[Ti] + 460[Al]$$

where the parentheses in the equation represent the content of element within the parentheses in the steel sheet in mass%.

[Heat treatment]

Next, the starting steel sheet is subjected to a heat treatment. The following steps (1) to (5) are sequentially performed in the heat treatment:

(1) heating the steel sheet to 700 °C at an average heating rate of 15 °C/s or more;
(2) heating the steel sheet to a soaking temperature of 740 °C or higher and 860 °C or lower at an average heating rate of 15 °C/s or less,
(3) holding the steel sheet at the soaking temperature for 60 seconds or more and 600 seconds or less,
(4) cooling the steel sheet to a cooling end temperature of 350 °C or higher and 550 °C or lower at an average cooling rate of 50 °C/s or less, and
(5) holding the steel sheet at the cooling end temperature for 30 seconds or more and 1200 seconds or less.

The following explains the conditions in each step and the reasons for limiting the conditions.

Average heating rate up to 700 °C: 15 °C/s or more

First, the starting steel sheet is heated to 700 °C at an average heating rate of 15 °C/s or more. The average heating rate here is the average heating rate during a period from the start of heating to when the temperature reaches 700 °C. Hereinafter, the average heating rate is referred to as "average heating rate up to 700 °C". When the average heating rate up to 700 °C is less than 15 °C/s, ductility of the eventually obtained high-strength thin steel sheet deteriorates. This is because that retained austenite is decomposed into ferrite and cementite during the heating when the average heating rate is less than 15 °C/s. As a result, cementite produces austenite and the austenite becomes lumpy, and accordingly the equivalent circular diameter of secondary phase in final microstructure increases, leading to failure of formation of fine martensite and retained austenite. Therefore, the average heating rate up to 700 °C is 15 °C/s or more. The average heating rate is preferably 17 °C/s or more. The average heating rate is more preferably 20 °C/s or more. On the other hand, although the upper limit of the average heating rate is not particularly limited, the rate is preferably 50 °C/s or less and more preferably 45 °C/s or less from the perspective of equipment and the like.

Average heating rate up to soaking temperature: 15 °C/s or less

Then, the steel sheet is heated to a soaking temperature which will be described later at an average heating rate of 15 °C/s or less. The average heating rate here is the average heating rate during a period from when the temperature is 700 °C to when the temperature reaches the soaking temperature. Hereinafter, the average heating rate is referred to as "average heating rate up to soaking temperature". When the average heating rate up to soaking temperature is more than 15 °C/s, formability of the eventually obtained high-strength thin steel sheet deteriorates. The reason is that when the average heating rate is more than 15 °C/s, the transformation from cementite formed during the heating to austenite is accelerated, and accordingly austenite tends to become lumpy during the subsequent soaking, leading to a coarse secondary phase in final microstructure. Therefore, the average heating rate up to soaking temperature is 15 °C/s or less. The average heating rate is preferably 10 °C/s or less. The average heating rate is more preferably 8 °C/s or less. On the other hand, although the lower limit of the average heating rate is not particularly limited, the rate is preferably 1 °C/s or more, more preferably 2 °C/s or more and still more preferably 3 °C/s or more from the perspective of production efficiency and the like.

Soaking temperature: 740 °C or higher and 860 °C or lower

When the soaking temperature is lower than 740 °C, the volume fraction of ferrite increases during the subsequent temperature holding, and the area ratio of ferrite in the eventually obtained microstructure becomes too large. Excessive ferrite renders it difficult to secure a TS of 980 MPa or more for a high-strength thin steel sheet. Therefore, the soaking temperature is 740 °C or higher. The soaking temperature is preferably 750 °C or higher. The soaking temperature is more preferably 760 °C or higher. The soaking temperature is still more preferably 770 °C or higher. On the other hand, when the soaking temperature exceeds 860 °C, the secondary phase tends to become coarse and lumpy when the steel sheet is held at the soaking temperature, and accordingly the secondary phase in final microstructure becomes coarse and lumpy and ductility deteriorates. Therefore, the soaking temperature is 860 °C or lower. The soaking temperature is preferably 850 °C or lower. The soaking temperature is more preferably 840 °C or lower. The soaking temperature is still more preferably 830 °C or lower.

Soaking time: 60 seconds or more and 600 seconds or less

Then, the steel sheet that has been heated to the soaking temperature is held at the soaking temperature for 60 seconds or more and 600 seconds or less. The time of being held at the soaking temperature is hereinafter referred to as "soaking time". When the soaking time is less than 60 seconds, ductility of the eventually obtained high-strength thin steel sheet deteriorates. This is because when the soaking time is less than 60 seconds, C and Mn, which are austenite stabilizing elements, can not sufficiently concentrate into austenite during the soaking. Insufficient concentration of C and Mn in retained austenite of final microstructure lowers stability of the retained austenite, leading to deterioration in ductility. Therefore, the soaking time is 60 seconds or more. The soaking time is preferably 100 seconds or more. On the other hand, when the soaking time exceeds 600 seconds, the secondary phase tends to become coarse and lumpy during the soaking, and accordingly the secondary phase in final microstructure becomes coarse and lumpy. As a result, ductility deteriorates. Therefore, the soaking time is 600 seconds or less. The soaking time is preferably 500 seconds or less. The soaking time is more preferably 400 seconds or less. The soaking time is still more preferably 300 seconds or less.

Average cooling rate down to cooling end temperature: 50 °C/s or less

When the soaking time has elapsed, the steel sheet is cooled down to a cooling end temperature which will be described later. The average cooling rate from the soaking temperature to cooling end temperature (hereinafter "average cooling rate down to cooling end temperature") is 50 °C/s or less. When the average cooling rate down to cooling end temperature exceeds 50 °C/s, ferrite formation during the cooling is suppressed and accordingly austenite coarsens when the cooling ends. As a result, the secondary phase in final microstructure also coarsens, leading to deterioration in ductility. Therefore, the average cooling rate is 50 °C/s or less. The average cooling rate is preferably 40 °C/s or less. The average cooling rate is more preferably 30 °C/s or less. On the other hand, although the lower limit of the average cooling rate is not particularly limited, the rate is preferably 5 °C/s or more and more preferably 10 °C/s or more from the perspective of production efficiency and the like.
For the cooling, any cooling method can be used alone or in combination. Examples of the cooling method include gas cooling, furnace cooling, mist cooling, roll-chilling, and water cooling.

Cooling end temperature: 350 °C or higher and 550 °C or lower

When the cooling end temperature exceeds 550 °C, formation of retained austenite is suppressed, and accordingly ductility deteriorates. Therefore, the cooling end temperature is 550 °C or lower. The cooling end temperature is preferably 520 °C or lower. The cooling end temperature is more preferably 490 °C or lower. On the other hand, when the cooling end temperature is less than 350 °C, martensite excessively forms, and accordingly strength of the eventually obtained steel sheet becomes too high to ensure ductility. Therefore, the cooling end temperature is 350 °C or higher. The cooling end temperature is preferably 380 °C or higher. The cooling end temperature is more preferably 400 °C or higher.

Holding time: 30 seconds or more and 1200 seconds or less

When the cooling has ended, the steel sheet is held at the cooling end temperature for 30 seconds or more and 1200 seconds or less. Hereinafter, the time of being held at the cooling end temperature is referred to as "holding time". When the holding time is less than 30 seconds, a desired amount of retained austenite is difficult to be obtained and martensite is excessively formed. As a result, ductility deteriorates. Therefore, the holding time is 30 seconds or more. The holding time is preferably 50 seconds or more. The holding time is more preferably 100 seconds or more. The holding time is still more preferably 200 seconds or more. On the other hand, even if the holding time exceeds 1200 seconds, ductility cannot be significantly improved since the producing amount of retained austenite does not further increase. On the contrary, productivity is lowered. Therefore, the holding time is 1200 seconds or less. The holding time is preferably 800 seconds or less. The holding time is more preferably 500 seconds or less.

[Zinc or zinc alloy coating treatment]

Furthermore, the steel sheet that has been held at the cooling end temperature can be subjected to zinc or zinc alloy coating treatment. The "zinc or zinc alloy coating treatment" here includes both of galvanizing treatment and zinc alloy coating treatment. The zinc alloy coating treatment can be a treatment for coating any zinc-contained alloy. In the zinc alloy coating treatment, it is preferable to form a zinc alloy coated layer such as a 5 % Al-Zn alloy coated layer containing 5 mass% of Al or a 55 % Al-Zn alloy coated layer containing 55 mass% of Al.

The zinc or zinc alloy coating treatment can be performed by any method, yet it is preferably hot-dip zinc or zinc alloy coating treatment. The hot-dip zinc or zinc alloy coating treatment can be alloyed hot-dip zinc or zinc alloy coating treatment. The alloyed hot-dip zinc or zinc alloy coating treatment is preferably in a way of hot-dip zinc or zinc alloy coating treatment followed by alloying treatment in a temperature range of 450 °C or higher and 550 °C or lower. Coating conditions of the zinc or zinc alloy coating treatment such as coating amount and coating device to be used are arbitrary.

EXAMPLES

The operation and effect of the high-strength thin steel sheet and the production method according to the present disclosure will be described below based on examples.

Starting steel sheets were prepared and then subjected to heat treatment to obtain high-strength thin steel sheets. The specific procedure was as follows.

- Preparing starting steel sheets

Hot rolled steel sheets and cold rolled steel sheets to be used as the starting steel sheets were prepared under various conditions. First, vacuum melting steel having the chemical composition listed in Table 1 was smelted in a laboratory to produce sheet-bar slabs with a thickness of 20 mm. The obtained sheet-bar slabs were heated to 1250 °C and then hot rolled at a finisher delivery temperature of 900 °C to obtain hot rolled steel sheets with a thickness of 2.4 mm. After the hot rolling, a coiling-equivalent heat treatment which simulated a coiling process at the coiling temperature listed in Tables 2 and 3 was performed. Specifically, in the coiling-equivalent heat treatment, the steel sheet that had been hot rolled was cooled down to the coiling temperature listed in Tables 2 and 3 at an average cooling rate of 40 °C/s, then held at the coiling temperature listed in Tables 2 and 3 for one hour, and then furnace cooled. In a case where neither cold rolling nor heat treatment was required, a hot rolled steel sheet to be used as the starting steel sheet was obtained by the above procedure. In a case where heat treatment was required but cold rolling was not required, for example No. 2, the starting steel sheet was obtained by performing a heat treatment under the conditions of the heat treatment following rolling listed in Table 2 after the coiling process.

In a case where cold rolling is required as well, the resulting hot rolled steel sheet of the above procedure was pickled with hydrochloric acid and then cold rolled at a rolling reduction of 50 % to obtain a cold rolled steel sheet with a thickness of 1.2 mm. Then, the obtained cold rolled steel sheet was subjected to a heat treatment under the conditions of the heat treatment following rolling listed in Tables 2 and 3.

The microstructure of the starting steel sheet obtained as described above, in other words the starting microstructure was measured by a method which will be described later. The measurement results are listed in Tables 2 and 3.

Subsequently, the steel sheets were subjected to heating, soaking, cooling, and a holding process when the cooling had ended under the heat treatment conditions listed in Tables 2 and 3 to produce high-strength thin steel sheets. Note that Nos. 18 and 19 were cooled down to room temperature during the heat treatment following cold rolling. Additionally, some of the high-strength thin steel sheets were further subjected to hot-dip galvanizing treatment to obtain high-strength hot-dip galvanized thin steel sheets. In the hot-dip galvanizing treatment, the steel sheet was immersed in a galvanizing bath at 475 °C containing 0.13 mass% of Al for 3 seconds. The obtained galvanized layer had a coating weight of 45 g/m$^2$ per side. Some of the high-strength hot-dip galvanized thin steel sheets were further subjected to alloying treatment to obtain high-strength galvannealed thin steel sheets.

Table 1

| Steel sample ID | Chemical composition (mass%)* | | | | | | | | | | | | | | | | | C/Mn | Ac₃ (°C) | Remarks |
|---|---|---|---|---|---|---|---|---|---|---|---|---|---|---|---|---|---|---|---|---|
| | C | Si | Mn | P | S | Al | N | Ti | Nb | V | Cr | Ni | Mo | Cu | B | Ca | REM | | | |
| A | 0.24 | 1.44 | 1.86 | 0.005 | 0.0010 | 0.029 | 0.0033 | - | - | - | - | - | - | - | - | - | - | 0.13 | 833 | Conforming steel |
| B | 0.22 | 1.58 | 2.63 | 0.004 | 0.0008 | 0.026 | 0.0029 | - | - | - | - | - | - | - | - | - | - | 0.08 | 819 | Conforming steel |
| C | 0.18 | 1.38 | 2.15 | 0.008 | 0.0016 | 0.030 | 0.0032 | 0.022 | - | - | - | - | - | - | 0.0015 | — | — | 0.08 | 844 | Conforming steel |
| D | 0.24 | 0.95 | 2.16 | 0.016 | 0.0017 | 0.034 | 0.0028 | - | 0.021 | - | - | - | - | - | - | - | - | 0.11 | 804 | Conforming steel |
| E | 0.17 | 1.32 | 1.88 | 0.016 | 0.0024 | 0.028 | 0.0035 | 0.015 | - | 0.052 | - | - | - | - | - | - | - | 0.09 | 854 | Conforming steel |
| F | 0.30 | 1.25 | 2.45 | 0.010 | 0.0017 | 0.029 | 0.0031 | - | - | - | 0.18 | - | 0.12 | - | - | - | - | 0.12 | 801 | Conforming steel |
| G | 0.26 | 1.34 | 1.85 | 0.013 | 0.0021 | 0.035 | 0.0032 | - | - | - | - | 0.21 | - | 0.17 | - | - | - | 0.14 | 821 | Conforming steel |
| H | 0.21 | 1.48 | 2.17 | 0.008 | 0.0027 | 0.033 | 0.0031 | - | - | - | - | - | - | - | - | 0.0005 | 0.0011 | 0.10 | 834 | Conforming steel |
| I | <u>0.09</u> | 1.32 | 1.51 | 0.013 | 0.0019 | 0.035 | 0.0036 | - | - | - | - | - | - | - | - | - | - | <u>0.06</u> | 879 | Comparative steel |
| J | <u>0.38</u> | 1.47 | 2.56 | 0.009 | 0.0018 | 0.034 | 0.0029 | - | - | - | - | - | - | - | - | - | - | 0.15 | 790 | Comparative steel |
| K | 0.24 | <u>0.36</u> | 1.77 | 0.008 | 0.0025 | 0.037 | 0.0032 | - | - | - | - | - | - | - | - | - | - | 0.14 | 791 | Comparative steel |
| L | 0.21 | 1.24 | <u>1.28</u> | 0.021 | 0.0022 | 0.032 | 0.0030 | - | - | - | - | - | - | - | - | - | - | 0.16 | 849 | Comparative steel |
| M | 0.25 | 1.36 | <u>3.19</u> | 0.013 | 0.0017 | 0.029 | 0.0031 | - | - | - | - | - | - | - | - | - | - | 0.08 | 787 | Comparative steel |
| N | 0.11 | 1.42 | <u>3.20</u> | 0.003 | 0.0008 | 0.033 | 0.0042 | - | - | - | - | - | - | - | - | - | - | <u>0.03</u> | 826 | Comparative steel |
| O | 0.33 | 1.36 | 1.53 | 0.011 | 0.0029 | 0.042 | 0.0035 | - | - | - | - | - | - | - | - | - | - | <u>0.22</u> | 828 | Comparative steel |

* The balance is Fe and incidental impurities.
Underline indicates that it is outside the range of the present disclosure.

Table 2

| No. | Steel sample ID | Coiling temperature[*1] (°C) | Cold rolling | Conditions of the heat treatment following rolling | | | | | | | | | Starting structure[*2] | | | | | | Heat treatment conditions | | | | | | | Coating treatment[*5] | Remarks |
|---|---|---|---|---|---|---|---|---|---|---|---|---|---|---|---|---|---|---|---|---|---|---|---|---|---|---|---|
| | | | | Soaking | | Cooling | | Holding | Area ratio (%) | | | | | | Heating | | Soaking | | Cooling | | Holding | | | | |
| | | | | Soaking temperature (°C) | Soaking time (second) | Average cooling rate (°C/s) | Cooling end temperature (°C) | Holding time (second) | BF | RA | BF+RA | M | Balance structure | First heating rate[*3] (°C/s) | Second heating rate[*4] (°C/s) | Soaking temperature (°C) | Soaking time (second) | Average cooling rate (°C/s) | Cooling end temperature (°C) | Holding time (second) | | |
| 1 | A | 650 | Performed | 900 | 100 | 10 | 400 | 300 | 72 | 17 | 89 | 6 | F | 20 | 5 | 805 | 100 | 20 | 450 | 300 | - | Example |
| 2 | A | 650 | - | 900 | 100 | 10 | 400 | 300 | 72 | 17 | 89 | 6 | F | 20 | 5 | 795 | 100 | 20 | 450 | 300 | GA | Example |
| 3 | A | 650 | Performed | 900 | 100 | 10 | 400 | 300 | 72 | 17 | 89 | 6 | F | 20 | 5 | 800 | 100 | 20 | 450 | 300 | GI | Example |
| 4 | B | 650 | Performed | 900 | 100 | 10 | 400 | 300 | 68 | 14 | 82 | 14 | F | 20 | 5 | 780 | 100 | 20 | 450 | 300 | - | Example |
| 5 | C | 650 | Performed | 900 | 100 | 10 | 400 | 300 | 66 | 12 | 78 | 13 | F | 20 | 5 | 800 | 100 | 20 | 450 | 300 | - | Example |
| 6 | D | 650 | Performed | 900 | 100 | 10 | 400 | 300 | 74 | 10 | 84 | 11 | F | 20 | 5 | 770 | 100 | 20 | 450 | 300 | - | Example |
| 7 | E | 650 | Performed | 900 | 100 | 10 | 400 | 300 | 62 | 10 | 72 | 11 | F | 20 | 5 | 805 | 100 | 20 | 450 | 300 | - | Example |
| 8 | F | 650 | Performed | 900 | 100 | 10 | 400 | 300 | 59 | 14 | 73 | 14 | F | 20 | 5 | 770 | 100 | 20 | 450 | 300 | - | Example |
| 9 | G | 450 | - | - | - | - | - | - | 66 | 12 | 78 | 13 | F | 20 | 5 | 785 | 100 | 20 | 450 | 300 | - | Example |
| 10 | H | 650 | Performed | 900 | 100 | 10 | 400 | 300 | 64 | 10 | 74 | 12 | F | 20 | 5 | 795 | 100 | 20 | 450 | 300 | - | Example |
| 11 | I | 650 | Performed | 900 | 100 | 10 | 400 | 300 | 68 | 5 | 73 | 13 | F | 20 | 5 | 830 | 100 | 20 | 450 | 300 | - | Comparative Example |
| 12 | J | 650 | Performed | 900 | 100 | 10 | 400 | 300 | 63 | 13 | 76 | 12 | F | 20 | 5 | 780 | 100 | 20 | 450 | 300 | - | Comparative Example |
| 13 | K | 650 | Performed | 900 | 100 | 10 | 400 | 300 | 72 | 3 | 75 | 14 | F | 20 | 5 | 760 | 100 | 20 | 450 | 300 | - | Comparative Example |
| 14 | L | 650 | Performed | 900 | 100 | 10 | 400 | 300 | 70 | 11 | 81 | 14 | F | 20 | 5 | 810 | 100 | 20 | 450 | 300 | - | Comparative Example |

16

Table 2 (cont'd)

| No. | Steel sample ID | Coiling temperature[1] (°C) | Cold rolling | Conditions of the heat treatment following rolling | | | | | Starting structure[2] | | | | | Heat treatment conditions | | | | | | | Coating treatment[5] | Remarks |
|---|---|---|---|---|---|---|---|---|---|---|---|---|---|---|---|---|---|---|---|---|---|---|
| | | | | Soaking | | Cooling | | Holding | Area ratio (%) | | | | Balance structure | Heating | | Soaking | | Cooling | | Holding | | |
| | | | | Soaking temperature (°C) | Soaking time (second) | Average cooling rate (°C/s) | Cooling end temperature (°C) | Holding time (second) | BF | RA | BF+RA | M | | First heating rate[3] (°C/s) | Second heating rate[4] (°C/s) | Soaking temperature (°C) | Soaking time (second) | Average cooling rate (°C/s) | Cooling end temperature (°C) | Holding time (second) | | |
| 15 | M | 650 | Performed | 900 | 100 | 10 | 400 | 300 | 64 | 14 | 78 | 17 | F | 20 | 5 | 760 | 100 | 20 | 450 | 300 | - | Comparative Example |
| 16 | N | 650 | Performed | 900 | 100 | 10 | 400 | 300 | 66 | 5 | 71 | 20 | F | 20 | 5 | 780 | 100 | 20 | 450 | 300 | - | Comparative Example |
| 17 | A | 650 | Performed | 800 | 100 | 10 | 400 | 300 | 43 | 8 | 51 | 15 | F | 20 | 5 | 800 | 100 | 20 | 450 | 300 | - | Comparative Example |
| 18 | A | 650 | Performed | 800 | 100 | 100 | | *6 | 0 | 0 | 0 | 48 | F | 20 | 5 | 790 | 100 | 20 | 450 | 300 | - | Comparative Example |
| 19 | A | 650 | Performed | 900 | 100 | 100 | | *6 | 0 | 0 | 0 | 100 | - | 20 | 5 | 795 | 100 | 20 | 450 | 300 | - | Comparative Example |
| 20 | A | 650 | Performed | 900 | 100 | 10 | 650 | 300 | 0 | 0 | 0 | 0 | F, P | 20 | 5 | 795 | 100 | 20 | 450 | 300 | - | Comparative Example |
| 21 | I | 650 | Performed | 800 | 100 | 10 | 400 | 300 | 35 | 4 | 39 | 10 | F | 20 | 5 | 795 | 100 | 20 | 450 | 300 | - | Comparative Example |
| 22 | C | 650 | Performed | 900 | 100 | 10 | 400 | 300 | 72 | 12 | 84 | 10 | F | 5 | 5 | 805 | 100 | 20 | 450 | 300 | - | Comparative Example |
| 23 | C | 650 | Performed | 900 | 100 | 10 | 400 | 300 | 72 | 12 | 84 | 10 | F | 20 | 20 | 790 | 100 | 20 | 450 | 300 | - | Comparative Example |
| 24 | C | 650 | Performed | 900 | 100 | 10 | 400 | 300 | 72 | 12 | 84 | 10 | F | 20 | -- | 700 | 100 | 20 | 450 | 300 | - | Comparative Example |

17

Table 3

| No. | Steel sample ID | Coiling tempera-ture[*1] (°C) | Cold rolling | Conditions of the heat treatment following rolling | | | | | Starting structure[*2] | | | | | | Heat treatment conditions | | | | | | | Coating treatment[*5] | Remarks |
|---|---|---|---|---|---|---|---|---|---|---|---|---|---|---|---|---|---|---|---|---|---|---|---|
| | | | | Soaking | | Cooling | | Holding | Area ratio (%) | | | | | Balance structure | Heating | | Soaking | | Cooling | | Holding | | |
| | | | | Soaking tempera-ture (°C) | Soaking time (second) | Average cooling rate (°C/s) | Cooling end tempera-ture (°C) | Holding time (second) | BF | RA | BF+RA | M | | | First heating rate[*3] (°C/s) | Second heating rate[*4] (°C/s) | Soaking tempera-ture (°C) | Soaking time (second) | Average cooling rate (°C/s) | Cooling end tempera-ture (°C) | Holding time (second) | | |
| 25 | C | 650 | Performed | 900 | 100 | 10 | 400 | 300 | 72 | 12 | 84 | 10 | F | 20 | 5 | <u>900</u> | 100 | 20 | 450 | 300 | - | Comparative Example |
| 26 | C | 650 | Performed | 900 | 100 | 10 | 400 | 300 | 72 | 12 | 84 | 10 | F | 20 | 5 | 805 | <u>10</u> | 20 | 450 | 300 | - | Comparative Example |
| 27 | F | 650 | Performed | 900 | 100 | 10 | 400 | 300 | 64 | 13 | 77 | 13 | F | 20 | 5 | 780 | 100 | <u>100</u> | 450 | 300 | - | Comparative Example |
| 28 | F | 650 | Performed | 900 | 100 | 10 | 400 | 300 | 64 | 13 | 77 | 13 | F | 20 | 5 | 785 | 100 | 20 | <u>300</u> | 300 | - | Comparative Example |
| 29 | F | 650 | Performed | 900 | 100 | 10 | 400 | 300 | 64 | 13 | 77 | 13 | F | 20 | 5 | 780 | 100 | 20 | <u>650</u> | 300 | - | Comparative Example |
| 30 | F | 650 | Performed | 900 | 100 | 10 | 400 | 300 | 64 | 13 | 77 | 13 | F | 20 | 5 | 775 | 100 | 20 | 450 | <u>15</u> | - | Comparative Example |
| 31 | <u>O</u> | 600 | Performed | 900 | 100 | 10 | 400 | 300 | 63 | 19 | 82 | 14 | F | 20 | 5 | 800 | 100 | 20 | 450 | 300 | - | Comparative Example |
| 32 | A | 410 | - | - | - | - | - | - | 76 | 11 | 87 | 7 | F | 20 | 5 | 820 | 120 | 20 | 400 | 500 | - | Example |
| 33 | B | 480 | - | - | - | - | - | - | 77 | 13 | 90 | 5 | F | 25 | 10 | 780 | 80 | 30 | 400 | 300 | - | Example |
| 34 | C | 530 | - | - | - | - | - | - | 72 | 10 | 82 | 9 | F, P | 20 | 5 | 800 | 150 | 20 | 400 | 200 | - | Example |
| 35 | E | 370 | - | - | - | - | - | - | 81 | 8 | 89 | 6 | F | 30 | 5 | 850 | 500 | 15 | 400 | 50 | - | Example |

Table 3 (cont'd)

| No. | Steel sample ID | Coiling temperature*1 (°C) | Cold rolling | Conditions of the heat treatment following rolling | | | | | Starting structure*2 | | | | | | Heat treatment conditions | | | | | | | Coating treatment*5 | Remarks |
|---|---|---|---|---|---|---|---|---|---|---|---|---|---|---|---|---|---|---|---|---|---|---|---|
| | | | | Soaking | | Cooling | | Holding | Area ratio (%) | | | | | Balance structure | Heating | | Soaking | | Cooling | | Holding | | |
| | | | | Soaking temperature (°C) | Soaking time (second) | Average cooling rate (°C/s) | Cooling end temperature (°C) | Holding time (second) | BF | RA | BF+RA | M | | | First heating rate*3 (°C/s) | Second heating rate*4 (°C/s) | Soaking temperature (°C) | Soaking time (second) | Average cooling rate (°C/s) | Cooling end temperature (°C) | Holding time (second) | | |
| 36 | A | 650 | - | - | - | - | - | - | 0 | 0 | $\underline{0}$ | 0 | F, P | 20 | 5 | 800 | 100 | 20 | 400 | 250 | - | Comparative Example |
| 37 | A | 600 | Performed | 860 | 100 | 15 | 420 | 400 | 72 | 16 | 88 | 7 | F | 15 | 5 | 790 | 100 | 30 | 400 | 200 | - | Example |
| 38 | A | 600 | Performed | 860 | 100 | 15 | 420 | 400 | 73 | 18 | 91 | 6 | F | 30 | 15 | 790 | 100 | 30 | 400 | 200 | - | Example |
| 39 | A | 620 | Performed | 860 | 200 | 30 | 360 | 1200 | 75 | 8 | 83 | 8 | F | 40 | 10 | $\underline{720}$ | 180 | 15 | 480 | 400 | - | Comparative Example |
| 40 | A | 640 | Performed | 860 | 200 | 30 | 360 | 1200 | 76 | 6 | 82 | 5 | F | 40 | 10 | 750 | 180 | 15 | 480 | 400 | - | Example |
| 41 | A | 620 | Performed | 860 | 200 | 30 | 360 | 1200 | 79 | 7 | 86 | 4 | F | 40 | 10 | $\underline{870}$ | 180 | 15 | 480 | 400 | - | Comparative Example |
| 42 | A | 600 | Performed | 860 | 200 | 30 | 360 | 1200 | 77 | 8 | 85 | 5 | F | 40 | 10 | 850 | 180 | 15 | 480 | 400 | - | Example |
| 43 | B | 700 | Performed | 840 | 550 | 45 | 380 | 800 | 69 | 10 | 79 | 10 | F | 20 | 5 | 810 | 60 | 20 | 380 | 600 | - | Example |
| 44 | B | 680 | Performed | 840 | 550 | 45 | 380 | 800 | 73 | 9 | 82 | 8 | F | 20 | 5 | 810 | $\underline{700}$ | 20 | 380 | 600 | - | Comparative Example |
| 45 | B | 680 | Performed | 840 | 550 | 45 | 380 | 800 | 71 | 10 | 81 | 9 | F | 20 | 5 | 810 | 550 | 20 | 380 | 600 | - | Example |
| 46 | B | 670 | Performed | 840 | 550 | 45 | 380 | 800 | 72 | 8 | 80 | 8 | F | 20 | 5 | 810 | 300 | 45 | 380 | 600 | - | Example |
| 47 | C | 660 | Performed | 920 | 60 | 5 | 520 | 45 | 65 | 14 | 79 | 13 | F | 30 | 5 | 780 | 150 | 30 | 350 | 300 | - | Example |
| 48 | C | 650 | Performed | 920 | 60 | 5 | 520 | 45 | 66 | 13 | 79 | 12 | F | 30 | 5 | 780 | 150 | 30 | 540 | 300 | - | Example |
| 49 | C | 660 | Performed | 920 | 60 | 5 | 540 | 45 | 68 | 13 | 81 | 13 | F, P | 30 | 5 | 780 | 150 | 30 | 420 | 30 | - | Example |
| 50 | C | 640 | Performed | 920 | 60 | 5 | 540 | 45 | 64 | 14 | 78 | 15 | F, P | 30 | 5 | 780 | 150 | 30 | 420 | 1200 | - | Example |

<u>Nomenclature to tables 1 to 3</u>

∗1 Coiling temperature after hot rolling during the manufacturing of starting steel sheet

∗2 BF:bainitic ferrite, RA:retained austenite, M:martensite, F:ferrite, P:perlite

∗3 Average heating rate up to 700 °C

∗4 Average heating rate from 700 °C up to soaking temperature

∗5 GA:galvannealing, GI:hot-dip galvanizing

Underline indicates that it is outside the range of the present disclosure.

- Evaluation of microstructure and tensile property

The microstructure and tensile property of each high-strength thin steel sheet obtained as described above were evaluated by the following method. The obtained results are listed in Tables 4 and 5. The microstructure of the starting steel sheet listed in Tables 2 and 3 was also evaluated by the same method.

(Area ratio of retained austenite)

The area ratio of retained austenite was measured through X-ray diffraction. In the measurement, the steel sheet surface was polished to a depth of one-fourth of the sheet thickness to expose a plane of sheet thickness 1/4, and the x-ray diffraction intensity of the plane of sheet thickness 1/4 was determined. Specifically, the volume ratio of retained austenite was calculated from the peak intensity ratio of (200) and (211) planes of BCC phase and (200), (220) and (311) planes of FCC phase through X-ray diffraction using Co K-alpha X-ray. The measurement position was at the center of the width direction of the steel sheet. The microstructure of the steel sheet of the present disclosure is three-dimensionally uniform, and therefore the volume ratio can be regarded as the area ratio of retained austenite. Measurement was carried out at three positions randomly selected on one high-strength thin steel sheet, and the average value of the obtained values was taken as the area ratio of retained austenite.

(Area ratio of microstructure other than retained austenite)

The area ratio of each microstructure other than retained austenite was obtained by etching a cross section in the rolling direction of the high-strength thin steel sheet with nital and then observing the cross section with a scanning electron microscope (SEM). The observation position was at the center of the width direction of the steel sheet and at a depth of one-fourth of the sheet thickness. An SEM image of the observation position was photographed at a magnification of 2000 times, and the area ratio of each microstructure was calculated through image analysis of the obtained SEM image. In the image analysis, the occupied area of each microstructure present in a randomly set 50 $\mu$m $\times$ 50 $\mu$m square region was determined and the area ratio thereof was calculated. The observation was carried out at five positions randomly selected on one high-strength thin steel sheet, and the average value of the obtained values was taken as the area ratio.

Each microstructure in the image analysis was identified by the following method.

Retained austenite and martensite are observed as massive white regions having a relatively smooth surface in the SEM image. Therefore, the area ratio of martensite was calculated by subtracting the area ratio of retained austenite measured by the above-mentioned method from the area ratio of the white region.

On the other hand, ferrite, tempered bainitic ferrite and bainitic ferrite are observed as black regions in the SEM image. Among the black regions, those in a massive form were identified as ferrite. Additionally, among the black regions, those having an elongated shape and a recognizable substructure were identified as bainitic ferrite, and those in which substructure could not be recognized were identified as tempered bainitic ferrite. Examples of the substructure include internal structure of lath, block, packet, etc. in grains.

In the above measurement, the grain size to be measured had a lower limit of 0.01 $\mu$m which is the measurement limit.

(Secondary phase)

The average equivalent circular diameter of secondary phase, the area ratio of coarse grain in secondary phase and the average minor axis length of secondary phase were obtained by etching a cross section in the rolling direction of the high-strength thin steel sheet with nital and then observing the cross section with a scanning electron microscope (SEM). The observation position was at the center of the width direction of the steel sheet and at a depth of one-fourth of the sheet thickness. An SEM image of the observation position was photographed at a magnification of 2000 times, and the obtained SEM image was subjected to image analysis. In the image analysis, occupied area and minor axis length of the secondary phase present in a randomly set 50 $\mu$m $\times$ 50 $\mu$m square region were determined. The average equivalent circular diameter of secondary phase was calculated from the obtained occupied area of the secondary phase. The measurement lower limit of the minor axis length was 0.01 $\mu$m. The observation was carried out at five positions randomly selected on one high-strength thin steel sheet, and the average value of the obtained values was adopted.

(Tensile property)

A No. 5 test piece as specified in JIS Z 2201 having a longitudinal direction, which is also the tensile direction, in a direction at 90 degrees from the rolling direction was taken from the high-strength thin steel sheet. A tensile test was carried out according to JIS Z 2241 using the obtained test piece to measure the tensile strength (TS), yield point (YP) and elongation (El).

Additionally, the strength-elongation balance represented by the product of tensile strength (TS) and elongation (El) and expressed as TS $\times$ El was calculated from the obtained values and the tensile property was evaluated based on the value of TS $\times$ El. The evaluation criteria were as follows.

Excellent: 25000 MPa·% $\leq$ TS $\times$ El

Good: 22000 MPa·% $\leq$ TS $\times$ El < 25000 MPa·%

Poor: TS $\times$ El < 22000 MPa·%

(Elongation anisotropy)

The following measurement was carried out to evaluate the elongation anisotropy. First, a tensile test was carried out taking the rolling direction, a direction at 45 degrees from the rolling direction, and a direction at 90 degrees from the rolling direction respectively as the tensile direction to measure the El of each direction. Except that the tensile direction was set as described above, the tensile test was carried out in the same manner as the one for evaluating the tensile property. Then, $\Delta$El, which is defined by the following equation, was calculated with the maximum value (max.El) and the minimum value (min.El) of the obtained El values of the three directions.

$$\Delta El = (\text{max.El}) - (\text{min.El})$$

The $\Delta$El is preferably 3 % or less and more preferably 2 % or less from the perspective of formability. On the other hand, since the smaller the $\Delta$El is, the better, the lower limit can be 0 %. Nevertheless, an $\Delta$El of 0.5 % or more or 1.0 % or more is also acceptable.

As can be seen from the results listed in Tables 4 and 5, the high-strength thin steel sheets satisfying the requirements of the present disclosure had a TS of 980 MPa or more, a TS $\times$ El of 22000 MPa·% or more and an $\Delta$El of 3 % or less. In contrast, the steel sheets not satisfying the requirements of the present disclosure had a TS $\times$ El of less than 22000 MPa·%, and some of them also had an $\Delta$El exceeding 3 %. Thus, according to the present disclosure, a high-strength thin steel sheet excellent in both tensile strength and elongation with small elongation anisotropy can be obtained.

Table 4

| No. | Steel sample ID | Microstructure of high-strength thin steel sheet | | | | | | Evaluation results | | | | | | Remarks |
|---|---|---|---|---|---|---|---|---|---|---|---|---|---|---|
| | | Area ratio (%)[*1] | | | Secondary phase [*2] | | | TS (MPa) | YP (MPa) | El (%) | TS'El (MPa×%) | Evaluation | ΔEl (%) | |
| | | F+TBF+BF | M | RA | Average equivalent circular diameter (mm) | Area ratio of coarse grain [*3] (%) | Average minor axis (mm) | | | | | | | |
| 1 | A | 64 | 19 | 17 | 1.1 | 5 | 0.26 | 1028 | 852 | 28.3 | 29092 | Excellent | 1.7 | Example |
| 2 | A | 60 | 19 | 15 | 1.5 | 3 | 0.34 | 1045 | 646 | 26.5 | 27693 | Excellent | 1.8 | Example |
| 3 | A | 63 | 18 | 19 | 1.4 | 4 | 0.22 | 996 | 640 | 27.9 | 27788 | Excellent | 1.5 | Example |
| 4 | B | 57 | 25 | 18 | 1.8 | 9 | 0.39 | 1251 | 993 | 18.7 | 23394 | Good | 2.7 | Example |
| 5 | C | 59 | 20 | 21 | 1.2 | 8 | 0.37 | 1082 | 694 | 24.4 | 26401 | Excellent | 1.6 | Example |
| 6 | D | 65 | 18 | 17 | 1.1 | 6 | 0.35 | 1158 | 931 | 19.3 | 22349 | Good | 1.8 | Example |
| 7 | E | 58 | 23 | 19 | 1.5 | 4 | 0.33 | 1055 | 666 | 21.5 | 22683 | Good | 2.4 | Example |
| 8 | F | 56 | 26 | 18 | 1.2 | 5 | 0.38 | 1281 | 844 | 18.3 | 23442 | Good | 1.6 | Example |
| 9 | G | 58 | 22 | 20 | 1.9 | 8 | 0.24 | 1041 | 653 | 26.0 | 27066 | Excellent | 1.7 | Example |
| 10 | H | 61 | 23 | 16 | 1.8 | 4 | 0.32 | 1012 | 716 | 28.2 | 28538 | Excellent | 1.9 | Example |
| 11 | I | 82 | 14 | 4 | 1.6 | 6 | 0.22 | 792 | 547 | 20.5 | 16236 | Poor | 2.6 | Comparative Example |
| 12 | J | 48 | 38 | 14 | 1.6 | 5 | 0.39 | 1384 | 944 | 11.5 | 15916 | Poor | 2.7 | Comparative Example |
| 13 | K | 68 | 29 | 3 | 1.7 | 8 | 0.34 | 1256 | 961 | 15.8 | 19845 | Poor | 2.1 | Comparative Example |
| 14 | L | 74 | 19 | 7 | 1.6 | 6 | 0.25 | 917 | 625 | 18.2 | 16689 | Poor | 2.3 | Comparative Example |
| 15 | M | 55 | 38 | 7 | 1.8 | 9 | 0.38 | 1369 | 1114 | 13.1 | 17934 | Poor | 2.2 | Comparative Example |
| 16 | N | 52 | 44 | 4 | 1.9 | 9 | 0.36 | 1372 | 878 | 12.3 | 16876 | Poor | 2.6 | Comparative Example |

| No. | Steel sample ID | Microstructure of high-strength thin steel sheet | | | | | | Evaluation results | | | | | | Remarks |
|---|---|---|---|---|---|---|---|---|---|---|---|---|---|---|
| | | Area ratio (%)[*1] | | | Secondary phase [*2] | | | | | | | | | |
| | | F+TBF+BF | M | RA | Average equivalent circular diameter (mm) | Area ratio of coarse grain [*3] (%) | Average minor axis (mm) | TS (MPa) | YP (MPa) | El (%) | TS'El (MPa×%) | Evaluation | ΔEl (%) | |
| 17 | A | 64 | 26 | 10 | <u>2.6</u> | 6 | 0.32 | 995 | 674 | 17.2 | 17114 | Poor | 2.8 | Comparative Example |
| 18 | A | 62 | <u>35</u> | <u>3</u> | <u>3.1</u> | <u>13</u> | <u>0.53</u> | 1132 | 924 | 14.9 | 16867 | Poor | 3.5 | Comparative Example |
| 19 | A | 65 | 29 | <u>6</u> | 1.5 | 7 | 0.33 | 1087 | 772 | 16.5 | 17936 | Poor | 2.3 | Comparative Example |
| 20 | A | 67 | 25 | <u>8</u> | <u>2.5</u> | <u>12</u> | <u>0.67</u> | 1035 | 828 | 16.7 | 17285 | Poor | 3.4 | Comparative Example |
| 21 | <u>I</u> | <u>75</u> | 18 | <u>7</u> | 1.2 | 7 | 0.21 | 891 | 589 | 22.8 | 20315 | Poor | 32 | Comparative Example |
| 22 | C | 60 | 28 | 12 | <u>3.5</u> | <u>18</u> | <u>0.86</u> | 1265 | 987 | 13.6 | 17204 | Poor | 1.6 | Comparative Example |
| 23 | C | 62 | 25 | 13 | <u>4.2</u> | <u>17</u> | <u>0.67</u> | 1078 | 657 | 15.8 | 17032 | Poor | 2.8 | Comparative Example |
| 24 | C | <u>73</u> | 15 | 12 | 1.7 | 5 | 0.21 | 854 | 619 | 20.2 | 17251 | Poor | 2 | Comparative Example |

*1 F: ferrite, TBF: tempered bainitic ferrite, BF: bainitic ferrite, M: martensite, RA: retained ustenite
*2 martensite and retained austenite
*3 area ratio of martensite and retained austenite grains having an equivalent circular diameter of 2.0 mm or more to the whole secondary phase Underline indicates that it is outside the range of the present disclosure

Table 5

| No. | Steel sample ID | Microstructure of high-strength thin steel sheet | | | | | | Evaluation results | | | | | | Remarks |
|---|---|---|---|---|---|---|---|---|---|---|---|---|---|---|
| | | Area ratio (%)*1 | | | Secondary phase*2 | | | TS (MPa) | YP (MPa) | EI (%) | TS·EI (MPa×%) | Evaluation | ΔEI (%) | |
| | | F+TBF+BF | M | RA | Average equivalent circular diameter (mm) | Area ratio of coarse grain *3(%) | Average minor axis | | | | | | | |
| 25 | C | 50 | 28 | 22 | 3.8 | 12 | 0.73 | 1056 | 828 | 12.8 | 13517 | Poor | 3.1 | Comparative Example |
| 26 | C | 68 | 25 | 7 | 1.9 | 7 | 0.36 | 982 | 601 | 16.7 | 16399 | Poor | 2.6 | Comparative Example |
| 27 | F | 38 | 29 | 33 | 1.8 | 8 | 0.38 | 1221 | 767 | 12.5 | 15263 | Poor | 2.3 | Comparative Example |
| 28 | F | 43 | 45 | 12 | 3.6 | 21 | 0.84 | 1356 | 946 | 10.3 | 13967 | Poor | 2.4 | Comparative Example |
| 29 | F | 69 | 29 | 2 | 1.3 | 8 | 0.25 | 965 | 658 | 18.6 | 17949 | Poor | 2.8 | Comparative Example |
| 30 | F | 52 | 42 | 6 | 3.2 | 15 | 0.50 | 1284 | 810 | 13.2 | 16949 | Poor | 2.6 | Comparative Example |
| 31 | O | 61 | 24 | 15 | 1.4 | 6 | 0.28 | 1357 | 915 | 12.6 | 17098 | Poor | 2.5 | Comparative Example |
| 32 | A | 59 | 20 | 21 | 1.3 | 5 | 0.26 | 1036 | 724 | 27.4 | 28386 | Excellent | 1.6 | Example |
| 33 | B | 55 | 28 | 17 | 1.9 | 9 | 0.37 | 1205 | 921 | 18.8 | 22654 | Good | 2.6 | Example |
| 34 | C | 65 | 16 | 19 | 1.3 | 8 | 0.34 | 1109 | 706 | 25.6 | 28390 | Excellent | 1.3 | Example |
| 35 | E | 62 | 28 | 10 | 1.9 | 10 | 0.38 | 1132 | 727 | 19.5 | 22074 | Good | 2.3 | Example |
| 36 | A | 61 | 31 | 8 | 3.6 | 32 | 1.32 | 1158 | 784 | 11.6 | 13433 | Poor | 1.7 | Comparative Example |
| 37 | A | 63 | 25 | 12 | 2.0 | 9 | 0.38 | 1081 | 908 | 21.1 | 22809 | Good | 2.4 | Example |
| 38 | A | 63 | 22 | 15 | 1.9 | 8 | 0.36 | 1056 | 819 | 22.6 | 23866 | Good | 2.1 | Example |
| 39 | A | 76 | 13 | 11 | 1.1 | 5 | 0.27 | 918 | 697 | 23.6 | 21665 | Poor | 2.8 | Comparative Example |

(continued)

| No. | Steel sample ID | Microstructure of high-strength thin steel sheet | | | | | | Evaluation results | | | | | | Remarks |
| | | Area ratio (%)[*1] | | | Secondary phase[*2] | | | | | | | | | |
| | | F+TBF+BF | M | RA | Average equivalent circular diameter (mm) | Area ratio of coarse grain [*3](%) | Average minor axis | TS (MPa) | YP (MPa) | El (%) | TS'El (MPa×%) | Evaluation | ΔEl (%) | |
| 40 | A | 67 | 18 | 15 | 1.2 | 5 | 0.28 | 993 | 706 | 23.4 | 23236 | Good | 2.7 | Example |
| 41 | A | 39 | 29 | 32 | 3.4 | 19 | 0.75 | 1237 | 948 | 12.8 | 15834 | Poor | 1.6 | Comparative Example |
| 42 | A | 50 | 26 | 24 | 1.8 | 9 | 0.37 | 1159 | 894 | 19.5 | 22601 | Good | 1.9 | Example |
| 43 | B | 67 | 20 | 13 | 1.5 | 6 | 0.29 | 1269 | 1023 | 18.1 | 22969 | Good | 1.6 | Example |
| 44 | B | 39 | 29 | 32 | 1.4 | 5 | 0.23 | 1312 | 1064 | 15.6 | 20467 | Poor | 1.5 | Comparative Example |
| 45 | B | 49 | 23 | 28 | 1.3 | 5 | 0.28 | 1238 | 995 | 18.6 | 23027 | Good | 1.6 | Example |
| 46 | B | 54 | 22 | 24 | 1.5 | 6 | 0.24 | 1206 | 968 | 20.1 | 24241 | Good | 1.8 | Example |
| 47 | C | 52 | 27 | 21 | 1.9 | 8 | 0.21 | 1121 | 755 | 20.3 | 22756 | Good | 1.9 | Example |
| 48 | C | 68 | 21 | 11 | 1.4 | 5 | 0.18 | 1065 | 648 | 21.6 | 23004 | Good | 2.4 | Example |
| 49 | C | 59 | 28 | 13 | 1.6 | 6 | 0.21 | 1158 | 766 | 19.8 | 22928 | Good | 2.6 | Example |
| 50 | C | 57 | 19 | 24 | 1.3 | 4 | 0.19 | 1037 | 682 | 24.8 | 25718 | Excellent | 2.7 | Example |

Nomenclature to table 5
*1 F: ferrite, TBF: tempered bainitic ferrite, BF: bainitic ferrite, M: martensite, RA: retained austenite
*2 martensite and retained austenite
*3 area ratio of martensite and retained austenite grains having an equivalent circular diameter of 2.0 μm or more to the whole secondary phase
Underline indicates that it is outside the range of the present disclosure.

EP 3 346 019 B1

**Claims**

1. A high-strength thin steel sheet having a sheet thickness of 0.6 mm to 6.0 mm, comprising:

    a chemical composition containing, by mass%,

    C: 0.10 % or more and 0.35 % or less,
    Si: 0.5 % or more and 2.0 % or less,
    Mn: 1.5 % or more and 3.0 % or less,
    P: 0.001 % or more and 0.050 % or less,
    S: 0.0001 % or more and 0.0100 % or less,
    Al: 0.001 % or more and 1.00 % or less, and
    N: 0.0005 % or more and 0.0200 % or less,
    optionally at least one selected from the group consisting of
    Ti: 0.005 % or more and 0.100 % or less,
    Nb: 0.005 % or more and 0.100 % or less,
    V: 0.005 % or more and 0.100 % or less,
    Cr: 0.05 % or more and 1.0 % or less,
    Ni: 0.05 % or more and 0.50 % or less,
    Mo: 0.05 % or more and 1.0 % or less,
    Cu: 0.005 % or more and 0.500 % or less,
    B: 0.0001 % or more and 0.0100 % or less,
    Ca: 0.0001 % or more and 0.0050 % or less, and
    REM: 0.0005 % or more and 0.0050 % or less,
    the balance being Fe and inevitable impurities, and
    a ratio of C content in mass% to Mn content in mass%, expressed as C/Mn, being 0.08 or more and 0.20 or less; and

    a microstructure consisting of

    a total area ratio of ferrite, tempered bainitic ferrite and bainitic ferrite of 40 % or more and 70 % or less,
    an area ratio of martensite of 5 % or more and 30 % or less, and
    an area ratio of retained austenite of 10 % or more and 35 % or less, to a total area of the microstructure of the high-strength thin steel sheet,
    an average equivalent circular diameter of martensite and retained austenite grains of 2.0 $\mu$m or less,
    an area ratio of martensite and retained austenite grains having an equivalent circular diameter of 2.0 $\mu$m or more to a total area of martensite and retained austenite of 10 % or less, and
    an average minor axis length of martensite and retained austenite grains of 0.40 $\mu$m or less,
    wherein the high-strength thin steel sheet has a tensile strength (TS) of 980 MPa or more, and
    a product of tensile strength (TS) and elongation (El) expressed by TS $\times$ El of 22000 MPa·% or more,
    the TS and El being measured by taking a No. 5 test piece as specified in JIS Z 2201 having a longitudinal direction, which is also the tensile direction, in a direction at 90 degrees from the rolling direction from the high-strength thin steel sheet, and carrying out a tensile test according to JIS Z 2241 using the obtained test piece.

2. The high-strength thin steel sheet according to claim 1, further comprising a zinc or zinc alloy coated layer on surface.

3. A method of producing a high-strength thin steel sheet according to claim 1, comprising
preparing a steel sheet having the chemical composition according to claim 1 and a microstructure where a total area ratio of bainitic ferrite and retained austenite to a total area of the microstructure of the steel sheet is 70 % or more,
heating the steel sheet to 700 °C at an average heating rate of 15 °C/s or more,
heating the steel sheet from 700 °C to a soaking temperature of 740 °C or higher and 860 °C or lower at an average heating rate of 15 °C/s or less,
holding the heated steel sheet at the soaking temperature for 60 seconds or more and 600 seconds or less,
cooling the steel sheet to a cooling end temperature of 350 °C or higher and 550 °C or lower at an average cooling rate of 50 °C/s or less, and
holding the cooled steel sheet at the cooling end temperature for 30 seconds or more and 1200 seconds or less.

4. The method of producing a high-strength thin steel sheet according to claim 3, further comprising subjecting the steel sheet after being held at the cooling end temperature to zinc or zinc alloy coating treatment.

**Patentansprüche**

1. Hochfestes dünnes Stahlblech mit einer Blechdicke von 0,6 mm bis 6,0 mm, das umfasst:

   eine chemische Zusammensetzung, die in Masseprozent

   0,10 % oder mehr und 0,35 % oder weniger C,
   0,5 % oder mehr und 2,0 % oder weniger Si,
   1,5 % oder mehr und 3,0 % oder weniger Mn,
   0,001 % oder mehr und 0,050 % oder weniger P,
   0,0001 % oder mehr und 0,0100 % oder weniger S,
   0,001 % oder mehr und 1,00 % oder weniger Al, sowie
   0,0005 % oder mehr und 0,0200 % oder weniger N,
   optional wenigstens ein Element, das ausgewählt wird aus
   0,005 % oder mehr und 0,100 % oder weniger Ti,
   0,005 % oder mehr und 0,100 % oder weniger Nb,
   0,005 % oder mehr und 0,100 % oder weniger V,
   0,05 % oder mehr und 1,0 % oder weniger Cr,
   0,05 % oder mehr und 0,50 % oder weniger Ni,
   0,05 % oder mehr und 1,0 % oder weniger Mo,
   0,005 % oder mehr und 0,500 % oder weniger Cu,
   0,0001 % oder mehr und 0,0100 % oder weniger B,
   0,0001 oder mehr und 0,0050 oder weniger Ca, sowie
   0,0005 % oder mehr und 0,0050 % oder weniger REM enthält,
   wobei der Rest Fe und unvermeidbare Verunreinigungen sind, und
   ein Verhältnis von C-Gehalt in Masseprozent zu Mn-Gehalt in Masseprozent, ausgedrückt als C/Mn, 0,08 oder mehr und 0,20 oder weniger beträgt; sowie

   eine Mikrostruktur, die aus

   einem Gesamt-Flächenanteil von Ferrit, angelassenem bainitischem Ferrit und bainitischem Ferrit von 40 % oder mehr und 70 % oder weniger,
   einem Flächenanteil von Martensit von 5 % oder mehr und 30 % oder weniger
   einem Flächenanteil von Restaustenit von 10 % oder mehr und 35 % oder weniger an einer Gesamtfläche der Mikrostruktur des hochfesten dünnen Stahlblechs,
   einem durchschnittlichen flächengleichen Kreisdurchmesser von Martensit und Restaustenit-Körnern von 2,0 $\mu$m oder weniger,
   einem Flächenanteil von Martensit und Restaustenit-Körnern mit einem flächengleichen Kreisdurchmesser von 2,0 $\mu$m oder mehr an einer Gesamtfläche von Martensit und Restaustenit von 10 % oder weniger sowie einer durchschnittlichen Nebenachsen-Länge von Martensit und Restaustenit-Körnern von 0,40 $\mu$m oder weniger besteht,
   wobei das hochfeste dünne Stahlblech eine Zugfestigkeit (TS) von 980 MPa oder mehr hat, und
   ein Produkt aus Zugfestigkeit (TS) und Dehnung (El), ausgedrückt durch TS x El, von 22000 Mpa·% oder mehr beträgt,
   wobei TS und El unter Verwendung eines Prüfkörpers Nr. 5 gemäß JIS Z 2201 aus dem hochfesten dünnen Stahlblech mit einer Längsrichtung, die auch die Zugrichtung ist, in einer Richtung in 90° zu der Walzrichtung gemessen werden und ein Zugversuch gemäß JIS Z 2241 unter Verwendung des erzeugten Prüfkörpers ausgeführt wird.

2. Hochfestes dünnes Stahlblech nach Anspruch 1, das des Weiteren eine Beschichtung an der Oberfläche aus Zink oder Zinklegierung umfasst.

3. Verfahren zum Herstellen eines hochfesten dünnen Stahlblechs nach Anspruch 1, das umfasst:

Fertigen eines Stahlblechs mit der chemischen Zusammensetzung nach Anspruch 1 und einer Mikrostruktur, wobei ein Gesamt-Flächenanteil von bainitischem Ferrit und Restaustenit an einer Gesamtfläche der Mikrostruktur des Stahlblechs 70 % oder mehr beträgt,

Erhitzen des Stahlblechs auf 700 °C mit einer durchschnittlichen Erhitzungsgeschwindigkeit von 15 °C/s oder mehr,

Erhitzen des Stahlblechs von 700 °C auf eine Durchwärm-Temperatur von 740 °C oder darüber und 860 °C oder darunter bei einer durchschnittlichen Erhitzungsgeschwindigkeit von 15 °C/s oder weniger,

Halten des erhitzten Stahlblechs bei der Durchwärm-Temperatur über 60 Sekunden oder länger und 600 Sekunden oder kürzer,

Abkühlen des Stahlblechs auf eine Abkühl-Endtemperatur von 350 °C oder darüber und 550 °C oder darunter bei einer durchschnittlichen Abkühlgeschwindigkeit von 50 °C/s oder weniger und

Halten des abgekühlten Stahlblechs bei der Abkühl-Endtemperatur über 30 Sekunden oder länger und 1200 Sekunden oder kürzer.

4. Verfahren zum Herstellen eines hochfesten dünnen Stahlblechs nach Anspruch 3, das des Weiteren umfasst, dass das Stahlblech nach dem Halten bei der Abkühl-Endtemperatur Beschichtungs-Behandlung mit Zink oder Zinklegierung unterzogen wird.

## Revendications

1. Tôle d'acier mince à haute résistance ayant une épaisseur de tôle de 0,6 mm à 6,0 mm, comprenant :

une composition chimique contenant, en % en masse,

C : 0,10 % ou plus et 0,35 % ou moins,
Si : 0,5 % ou plus et 2,0 % ou moins,
Mn : 1,5 % ou plus et 3,0 % ou moins,
P : 0,001 % ou plus et 0,050 % ou moins,
S : 0,0001 % ou plus et 0,0100 % ou moins,
Al : 0,001 % ou plus et 1,00 % ou moins, et
N : 0,0005 % ou plus et 0,0200 % ou moins,

facultativement au moins un élément choisi parmi le groupe constitué de

Ti : 0,005 % ou plus et 0,100 % ou moins,
Nb : 0,005 % ou plus et 0,100 % ou moins,
V : 0,005 % ou plus et 0,100 % ou moins,
Cr : 0,05 % ou plus et 1,0 % ou moins,
Ni : 0,05 % ou plus et 0,50 % ou moins,
Mo : 0,05 % ou plus et 1,0 % ou moins,
Cu : 0,005 % ou plus et 0,500 % ou moins,
B : 0,0001 % ou plus et 0,0100 % ou moins,
Ca : 0,0001 % ou plus et 0,0050 % ou moins, et
REM : 0,0005 % ou plus et 0,0050 % ou moins,
le reste étant Fe et des impuretés inévitables, et
un rapport entre une teneur en C en % en masse et une teneur en Mn en % en masse, exprimé par C/Mn, étant de 0,08 ou plus et de 0,20 ou moins ; et

une microstructure constituée de

un rapport surfacique total de ferrite, de ferrite bainitique trempé et de ferrite bainitique de 40 % ou plus et de 70 % ou moins,
un rapport surfacique de martensite de 5 % ou plus et de 30 % ou moins, et
un rapport surfacique d'austénite retenue de 10 % ou plus et de 35 % ou moins, par rapport à une surface totale de la microstructure de la tôle d'acier mince à haute résistance,
un diamètre circulaire équivalent moyen de grains de martensite et de d'austénite retenue de 2,0 $\mu$m ou moins,

un rapport surfacique entre des grains de martensite et d'austénite retenue ayant un diamètre circulaire équivalent de 2,0 μm ou plus et une surface totale de martensite et d'austénite retenue de 10 % ou moins, et une longueur moyenne d'axe mineur de grains de martensite et d'austénite retenue de 0,40 μm ou moins, dans laquelle la tôle d'acier mince à haute résistance a une résistance à la traction (TS) de 980 MPa ou plus, et

un produit de résistance à la traction (TS) et d'allongement (El) exprimé par TS x El de 22 000 MPa • % ou plus, les valeurs TS et El étant mesurées en prenant un échantillon test n°5 comme spécifié dans la norme JIS Z 2201 ayant une direction longitudinale, qui est également la direction de traction, dans une direction à 90 degrés de la direction de laminage à partir de la tôle mince d'acier à haute résistance, et en effectuant un test de traction selon la norme JIS Z 2241 en utilisant l'échantillon test obtenu.

2. Tôle d'acier mince à haute résistance selon la revendication 1, comprenant en outre une couche revêtue de zinc ou d'alliage de zinc sur une surface.

3. Procédé de production d'une tôle d'acier mince à haute résistance selon la revendication 1, comprenant les étapes consistant à

préparer une tôle d'acier ayant la composition chimique selon la revendication 1 et une microstructure dans laquelle un rapport surfacique total entre la ferrite bainitique et l'austénite retenue et une surface totale de la microstructure de la tôle d'acier est de 70 % ou plus,

chauffer la tôle d'acier à 700°C à une vitesse de chauffage moyenne de 15°C/s ou plus,

chauffer la tôle d'acier depuis 700°C jusqu'à une température de trempage de 740°C ou plus et de 860°C ou moins à une vitesse de chauffage moyenne de 15°C/s ou moins,

maintenir la tôle d'acier chauffée à la température de trempage pendant 60 secondes ou plus et 600 secondes ou moins,

refroidir la tôle d'acier à une température de fin de refroidissement de 350°C ou plus et de 550°C ou moins à une vitesse de refroidissement moyenne de 50°C/s ou moins, et

maintenir la tôle d'acier refroidie à la température de fin de refroidissement pendant 30 secondes ou plus et 1 200 secondes ou moins.

4. Procédé de production d'une tôle d'acier mince à haute résistance selon la revendication 3, comprenant en outre de soumettre la tôle d'acier après qu'elle ait été maintenue à la température de fin de refroidissement à un traitement de revêtement de zinc ou d'alliage de zinc.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4291860 B
- JP 4362319 B
- JP 3889768 B
- EP 2821517 A1